# EUROPEAN PATENT APPLICATION

(11) **EP 0 953 437 A1**
(43) Date of publication of application: **03.11.1999**
(21) Application number: 98107654.0
(22) Date of filing: 27.04.1998
(51) Int. Cl.: B29D 31/515

(54) **Integral EVA insole with peripheral ornamental strip and manufacturing process thereof**

(71) Applicant: Chi, Cheng-Hsian, Taichung, Taiwan, R.O.C. (TW)
(72) Inventor: Chi, Cheng-Hsian, Taichung, Taiwan, R.O.C. (TW)
(74) Representative: WILHELMS, KILIAN & PARTNER Patentanwälte

(57) **Abstract**

An integral EVA (ethylene vinyl acetate) insole with peripheral ornamental strip (10) and a manufacturing process thereof, wherein EVA (ethylene vinyl acetate), a foaming agent and a binder are mixed, flattened and cut to blanks of scaled-down shape. The scaled-down blanks each comprise an ornamental strip (10) with two insole halves (11), which have elongated surfaces (12) that point away from the ornamental strip and fit to each other. The scaled-down insole blanks are put into a mold and heat foamed at a temperature of 180°C. The ornamental strip is then bent, such that the two insole halves lie next to each other, and the two insole halves are glued together. Thus the ornamental strip and the insole are integrated in a single body.

## Description

### BACKGROUND OF THE INVENTION

### 1. Field of the Invention

The present invention relates to an integral EVA (ethylene vinyl acetate) insole with peripheral ornamental strip and the manufacturing process thereof.

### 2. Description of Related Art

The sole of a common sports shoe comprises an insole layer and a wear-resistant rubber layer, glued to the bottom side of the insole layer. The material of the insole layer is elastic and durable and is a mixture of ethylene vinyl acetate (EVA) with a foaming agent and a binder. The material is stirred, foamed by heating and cut into shape, forming insoles, which in use absorb shocks and are comfortable to wear.

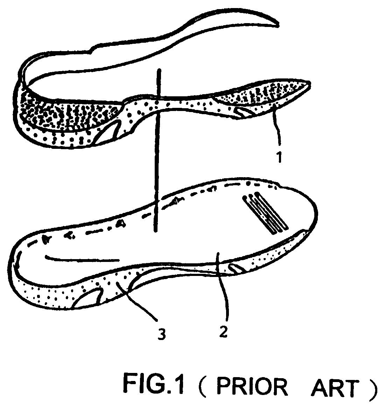

The present inventor has disclosed a "Production Method for EVA Insoles with Peripheral Borders" (Taiwan Patent Publication No. 287091), in which a manufacturing process for foamed insole is taught. Therein, as shown in Fig. 1, a foamed insole 2 is surrounded by an ornamental strip 1, which is glued to the foamed insole 2. A manufacturing process for the ornamental border has been disclosed by the present inventor under "Production Method for Peripheral Ornamental Borders of EVA insoles" (Taiwan Patent Publication No. 318810), wherein the foamable material is injected into the blank of the ornamental strip, but of smaller size. The blank is foamed under heat in a heat-pressing mold or an embossed pattern mold so as to yield an ornamental strip with the pattern. As shown in Fig. 1, after the insole 2 and the ornamental strip 1 have been molded into shape, a peripheral border 3 is put around the insole 2 and glued thereto. This conventional manufacturing process requires expensive injection mold machines and is complicated. Furthermore, since the ornamental strip 1 and the peripheral border 3 around the insole 1 are glued together by heat rather than fused into a single body, the connection between the ornamental strip 1 and the peripheral border 3 may loosen during rapid movements, and the ornamental strip 1 may fall off. Therefore the conventional manufacturing process needs improvement.

### SUMMARY OF THE INVENTION

It is the object of the present invention to provide an integral EVA (ethylene vinyl acetate) insole with peripheral ornamental strip and the manufacturing process thereof, wherein EVA (ethylene vinyl acetate), a foaming agent and a binder are mixed, flattened and cut to blanks of scaled-down shape. The characteristic of the present invention is that the scaled-down blanks each comprise an ornamental strip with two insole halves, which have elongated surfaces that point away from the ornamental strip and fit to each other. The scaled-down insole blanks are put into a mold and heat foamed at a temperature of 180 °C. The ornamental strip is then bent, such that the two insole halves lie next to each other, and the two insole halves are glued together. Thus the ornamental strip and the insole are a single body of increased stability, giving the final product better value. The manufacturing method of the present invention allows to adjust the apparatus and the process used to any demand on the design of the ornamental strip, decreasing cost and required working time.

The present invention can be more fully understood by reference to the following description and accompanying drawings.

### BRIEF DESCRIPTION OF THE DRAWINGS

Fig. 1 (prior art) is a schematic illustration of the insole with the peripheral border and the ornamental strip glued thereon.
Fig. 2 is a flow chart of the manufacturing process of the present invention.
Fig. 3 is an illustration of the ornamental strip with the insole halves used in the manufacturing process of the present invention, showing the elongated vertical surfaces of the insole halves fitting to each other, allowing to be glued together.
Fig. 4 is a schematic illustration of the ornamental strip of Fig. 3 bent in a way that the insole halves join each other to be glued together.
Fig. 5 is a schematic illustration of the final product of the manufacturing process of the present invention.
Fig. 6 is an illustration of the ornamental strip halves with the insole halves used in the manufacturing process of the present invention in the second embodiment.
Fig. 7 is an illustration of the ornamental strip with the insole halves used in the manufacturing process of the present invention in the third embodiment, showing how the heels of the insole halves fit together.
Fig. 8 is a top view of the ornamental strip with the insole halves of Fig. 7 after bending and gluing, showing the glued edges.

### DETAILED DESCRIPTION OF THE PREFERRED EMBODIMENTS

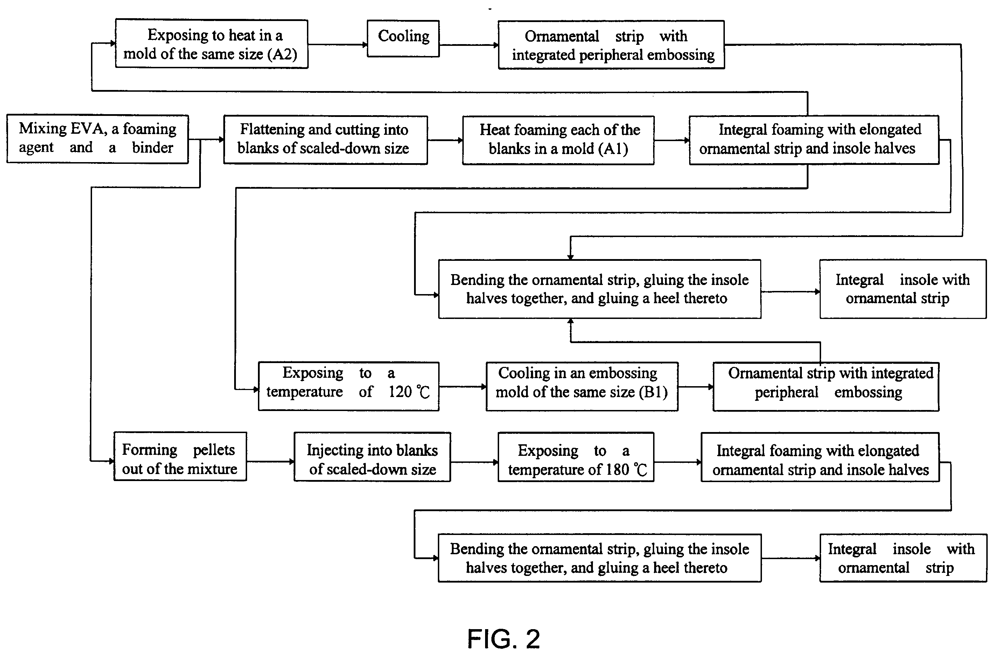

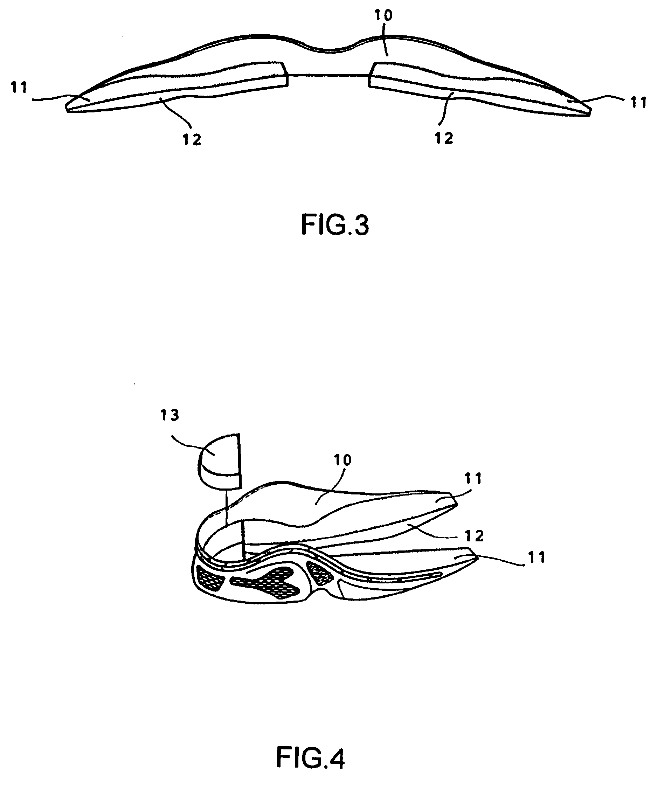

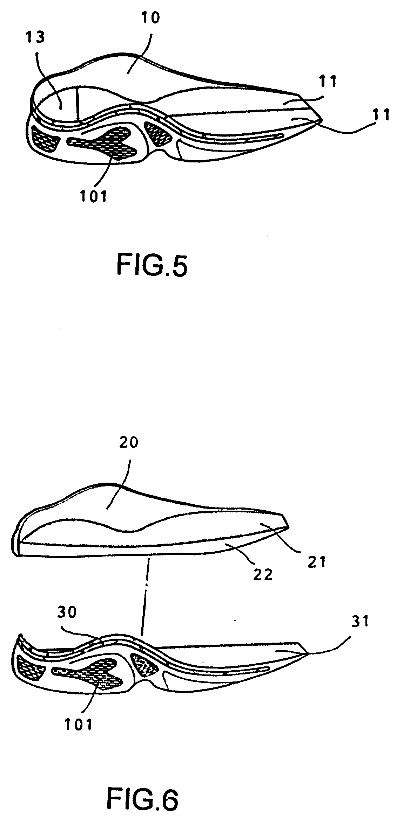

The integral EVA (ethylene vinyl acetate) insole with peripheral ornamental strip and the manufacturing process thereof of the present invention in a first embodiment is illustrated in Figs. 2 - 5. The EVA insole with peripheral ornamental strip of the present invention comprises an ornamental strip 10 and two insole halves 11 which fit together to form a complete insole. Each of the insole halves 11 has an elongated vertical surface 12 that points away from the ornamental strip 10. The two elongated vertical surfaces 12 fit to each other, allowing to be glued together. In the manufacturing process of the present invention, EVA (ethylene vinyl acetate), a foaming agent and a binder are mixed, flattened and cut to castings of final shape, as shown in Fig. 3, however of scaled-down size. Every scaled-down blank is put into a mold A1 and exposed to a temperature of 180°C. In the mold A1, the blank undergoes expansionary pressure. After a predefined time, the mold A1 is opened, the blank gets into contact with air and expands to final size, the expanded blank having the ornamental strip 10 and the two insole halves 11. The ornamental strip 10 is bent, such that the elongated vertical surfaces 12 join each other, as shown in Fig. 4. The insole halves 11 are glued to each other at the elongated vertical surfaces 12. A semicircular heel 13 of the same material, which is relatively thick, is glued into the insole. Thus the integral EVA insole with peripheral ornamental strip of the present invention is manufactured quickly, as shown in Fig. 5. The disadvantage of separately producing and gluing together of an insole and an ornamental strip is avoided. The design of the present invention of insole and peripheral ornamental strip in a single body also ensures better precision and increased productivity of manufacturing. The difficult process of gluing a conventional ornamental strip on an irregularly shaped periphery of an insole, as shown in Fig. 1, is not necessary. Since in the present invention insole and peripheral ornamental strip form a single body, which is able to withstand high forces, rapid movements will not cause the ornamental strip to loosen from the insole. Therefore the integral EVA insole with peripheral ornamental strip of the present invention and the manufacturing process thereof not only delivers more effective production, but also products of increased stability.

To add an embossing to the ornamental strip 10 after foaming, further working steps are performed. The foamed and expanded blank is exposed to a temperature of 120°C. Then the blank is put into a cold mold B1 of the same size, which has an embossed pattern, engraving an embossing 101 on the ornamental strip 10.

In another variant, the foamed and expanded blank is put into a mold A2 of the same size and heated. An embossed pattern in the mold A2 engraves an embossing 101 on the ornamental strip 10. Then the casting is cooled.

A multicolored ornamental strip 10 is can be made by that the blank of the ornamental strip 10 is overlapped by a plurality of platelets, and engages integrally with the plurality of platelets under heat-pressing and foaming. Any suitable design of colors, shapes and hardness for each platelet can be implemented.

In the present invention, the steps involving the heated molds A1, A2 and the cold mold B1 can be combined according to demands on the design of the ornamental strip 10, leading to shortened working time and lower production cost, reduced wear and increased quality of the ornamental strip 10.

In another process, plastic pellets are formed out of the EVA foaming material and then injected into blanks of scaled-down size. Every blank is exposed to a temperature of 180°C and undergoes expansionary pressure. Thus an expanded blank having the ornamental strip 10 with an embossed pattern and the two insole halves 11 is obtained. Then the ornamental strip 10 is bent, such that the elongated vertical surfaces 12 join each other, as shown in Fig. 4. The insole halves 11 are glued to each other at the elongated vertical surfaces 12. A semicircular heel 13 of the same material, which is relatively thick, is glued into the insole, yielding the final integral insole with peripheral ornamental strip, as shown in Fig. 5.

Referring to Fig. 6, the integral EVA insole with peripheral ornamental strip of the present invention in a second embodiment comprises two ornamental strip halves 20, 30 and two insole halves 21, 31, which are respectively attached to the ornamental strip halves 20, 30. Each of the insole halves 21, 31 has an elongated vertical surface 22, 32 pointing away from the ornamental strip 20, 30, respectively. In the manufacturing process of the present invention in the second embodiment, each ornamental strip half 20, 30, forming a single body with the insole half 21, 31, is separately foamed. Then the two insole halves 21, 31 are glued to each other at the elongated vertical surfaces 22, 32 thereof, yielding the final integral insole with peripheral ornamental strip.

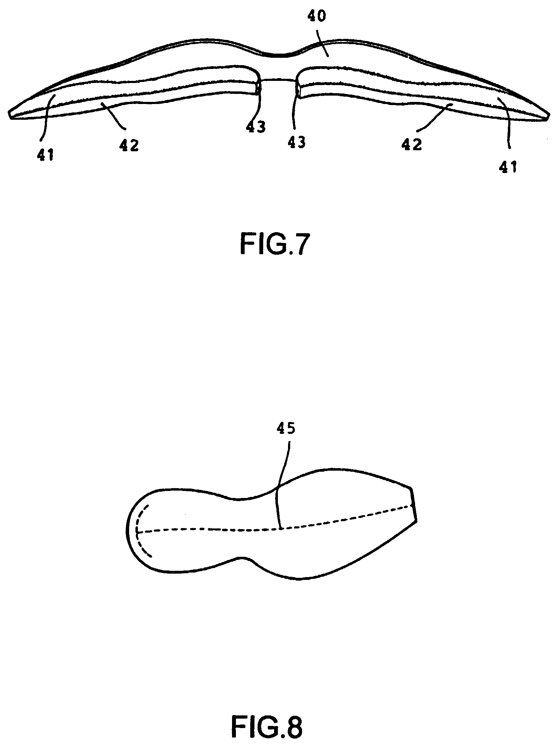

Referring to Fig. 7 and 8, the integral EVA insole with peripheral ornamental strip of the present invention in a third embodiment comprises an ornamental strip 40 and two insole halves 41, which are attached to the ornamental strip 40, forming a single body. Each of the insole halves 41 has an elongated vertical surface 42 pointing away from the ornamental strip 40 and an inner end with a bent vertical surface 43, the two inner ends of the two insole halves facing each other. In the manufacturing process of the present invention in the third embodiment, after the ornamental strip 40 has been bent, the two insole halves 41 are glued to each other at the elongated vertical surfaces 42 thereof, and the bent vertical surfaces 43 are glued to the ornamental strip 40, such that gluing edges 45 result, as shown in Fig. 8. The gluing edge 45 running along the central axis of the insole ensures that the ornamental strip 40 will not loosen from the insole.

While the invention has been described with reference to preferred embodiments thereof, it is to be understood that modifications or variations may be easily made without departing from the scope and spirit of this invention which is defined by the appended claims.

## Claims

1. An integral EVA (ethylene vinyl acetate) insole with peripheral ornamental strip and a process for manufacturing said integral EVA insole with peripheral ornamental strip, comprising the steps of:
mixing EVA (ethylene vinyl acetate) composition, a foaming agent and a binder into a molding mixture;
flattening and cutting said molding mixture into a plurality of blanks, each of said plurality of blanks having an ornamental strip and two insole halves, which separately extend from said ornamental strip and each have an elongated vertical surface that points away from said ornamental strip, and having a scaled-down size;
heat foaming each of said plurality of blanks in a mold at a temperature of 180°C; and
bending said ornamental strip, such that said elongated vertical surfaces join each other, and gluing said insole halves to each other at said elongated vertical surfaces.

2. An integral EVA insole with peripheral ornamental strip and a process for manufacturing said integral EVA insole with peripheral ornamental strip according to claim 1, wherein a semicircular heel, which is relatively thick, is glued into said insole, said heel being made of the same material as said insole.

3. An integral EVA insole with peripheral ornamental strip and a process for manufacturing said integral EVA insole with peripheral ornamental strip according to claim 1, wherein said process, after heat foaming said plurality of blanks, further comprises the steps of exposing said plurality of blanks to heat and cold molding, so as to add an embossed pattern to said ornamental strip of each blank.

4. An integral EVA insole with peripheral ornamental strip and a process for manufacturing said integral EVA insole with peripheral ornamental strip according to claim 1, wherein pellets are formed out of said molding mixture and then injected into a plurality of blanks of scaled-down sizes.

5. An integral EVA insole with peripheral ornamental strip and a process for manufacturing said integral EVA insole with peripheral ornamental strip according to claim 4, wherein said plurality of blanks are further heat foamed at a temperature of 180°C.

6. An integral EVA insole with peripheral ornamental strip and a process for manufacturing said integral EVA insole with peripheral ornamental strip according to claim 5, wherein each of said heat foamed plurality of blanks has an ornamental strip and insole halves with elongated vertical surfaces and wherein said ornamental strip of said heat foamed blank is bent and said insole halves thereof are glued to each other at said elongated vertical surfaces thereof.

7. An integral EVA insole with peripheral ornamental strip and a process for manufacturing said integral EVA insole with peripheral ornamental strip according to claim 1 or 5, wherein each of said insole halves has an inner end with a bent vertical surface, said two inner ends of said two insole halves facing each other.

8. An integral EVA insole with peripheral ornamental strip and a process for manufacturing said integral EVA insole with peripheral ornamental strip according to claim 1 or 5, wherein each of said plurality of blanks is overlapped by a plurality of platelets of different colors and shapes and engages integrally with said plurality of platelets under heat-pressing and foaming to form a multicolored ornamental strip.
